# EUROPÄISCHE PATENTSCHRIFT

(11) **EP 2 878 938 B1**
(45) Veröffentlichungstag und Bekanntmachung des Hinweises auf die Patenterteilung: **04.07.2018**
(21) Anmeldenummer: 13194690.7
(22) Anmeldetag: 27.11.2013
(51) Int. Cl.: G01L 1/12, B64C 13/26, B64D 45/00, G01L 3/10

(54) **Magnetostriktiver Sensor für Aktuatoren in Flugzeugen**
Magnetostrictive sensor for actuators in aircraft
Capteur magnétostrictif pour des actionneurs dans des avions

(43) Veröffentlichungstag der Anmeldung: 03.06.2015
(73) Patentinhaber: NCTE AG, 82008 Unterhaching (DE)
(72) Erfinder: Steinacher, Bastian, 81671 München (DE)
(74) Vertreter: Grünecker Patent- und Rechtsanwälte PartG mbB

(56) Entgegenhaltungen:
- EP-A2- 1 902 287
- WO-A1-99/56099
- WO-A1-2005/047108
- WO-A1-2011/085400
- WO-A2-2008/086248
- DE-A1-102009 020 840
- DE-A1-102010 044 678
- DE-A1-102013 013 340
- GB-A- 2 460 518
- US-A- 5 440 193

## Beschreibung

### Gebiet der Erfindung

Die vorliegende Erfindung betrifft eine Vorrichtung und ein Verfahren zum Bestimmen einer mechanischen Kraft eines Aktuators auf eine bewegliche Flugzeugkomponente.

### Stand der Technik

In modernen Flugzeugen wird eine Vielzahl an Aktuatoren benötigt, um bewegliche Komponenten kontrolliert zu betätigen. Beispiele für solche Komponenten sind Landeklappen, Bremsklappen, Leitwerke, und Fahrwerke. Aufgrund hoher Sicherheitsanforderungen und hoher wirkender Kräfte einerseits, und dem Zwang zur Gewichts- und Kosteneinsparung andererseits stellt die Auslegung dieser mechanischen Antriebseinheiten für derartige Komponenten eine besondere Herausforderung dar. Insbesondere soll auch nach Beschädigungen, Verklemmen, leichten Unfällen und anderen Betriebsstörungen ein möglichst weitgehender Betrieb dieser Aggregate gewährleistet bleiben. Besonders gefürchtet ist ein Verklemmen von mechanisch über Gelenkwellen angetriebenen Landeklappen (sogenannter "skew event"), das zu gravierenden Schäden an Strukturbauteilen des Flugzeugs, zum Verlust der Landeklappe bis hin zum Absturz führen kann.

Aus dem Stand der Technik sind einerseits mechanisch wirkende Überlastsicherungen (z.B. "torque limiter"), die ein Überschreiten vorgegebener Kräfte verhindern sollen - beispielsweise aus der DE102007027137 - bekannt. Andererseits sind aus der DE102007044642 Vorrichtungen und Verfahren bekannt, die die anliegenden Kräfte durch Sensoren erfassen und zur Begrenzung, Steuerung oder Regelung des Antriebs heranziehen. Herkömmliche Sensoren auf Basis zusätzlich angebrachter Dehnungsmessstreifen sind hierzu jedoch kaum geeignet.

Das Dokument WO 99/56099 A1 offenbart einen magnetoelastischen Drehmoment- / Kraftsensor. Dokument EP 1 902 287 A2 betrifft ein Verfahren zur Lastbegrenzung in Antriebssystemen für Flugzeughochauftriebssysteme. Dokument DE 10 2010 044 678 A1 offenbart eine Überwachungsvorrichtung für ein Stellsystem eines Flugzeugs. Die Überwachung wird mit Hilfe eines Lastsensors zur Messung der in einer Antriebsstange entlang ihrer Längsrichtung auftretenden Längskraft durchgeführt. Dokument US 5 440 193 A betrifft ein Verfahren und eine Vorrichtung zum Bereitstellen oder Erfassen von Spannungen in einem Substrat mit wenigstens einem Aktuator bzw. Sensorelement, welches transversale und longitudinale Achsen aufweist. WO 2011/085400 A1 offenbart einen magnetoelastischen Kraftsensor zum Messen einer Biegekraft. WO 2008/086248 A2 offenbart eine Vorrichtung zum Bestimmen der Änderung eines Drehmoments.

### Beschreibung der Erfindung

Aufgabe der vorliegenden Erfindung ist es, die Nachteile des Stands der Technik zumindest teilweise zu überwinden, insbesondere hinsichtlich Gewicht und Zuverlässigkeit.

Diese Aufgabe wird durch eine Vorrichtung zum Bestimmen einer mechanischen Kraft eines Aktuators auf eine bewegliche Flugzeugkomponente gemäß Patentanspruch 1 gelöst.

Bei einer Magnetisierung in Umfangsrichtung liegt das Magnetfeld zirkular im Material der Welle und tritt ohne Torsion der Welle nicht oder nur als geringfügiges Streufeld aus der Oberfläche heraus. Bei Anliegen eines Drehmoments und einer daraus resultierender Torsion der Welle ergibt sich eine Magnetfeldkomponente außerhalb der Welle (bzw. auch innerhalb der Welle bei einer Hohlwelle), deren Größe vom anliegenden Drehmoment abhängt, insbesondere proportional zum Drehmoment sein kann.

Das Dokument WO 99/56099 A1 offenbart einen magnetoelastischen Drehmoment- / Kraftsensor. Dokument EP 1 902 287 A2 betrifft ein Verfahren zur Lastbegrenzung in Antriebssystemen für Flugszeughochauftriebssysteme. Dokument DE 10 2010 044 678 A1 offenbart eine Überwachungsvorrichtung für ein Stellsystem eines Flugzeugs. Die Überwachung wird mit Hilfe eines Lastsensors zur Messung der in einer Antriebsstange entlang ihrer Längsrichtung auftretenden Längskraft durchgeführt. Dokument US 5 440 193 A betrifft ein Verfahren und eine Vorrichtung zum Bereitstellen oder Erfassen von Spannungen in einem Substrat mit wenigstens einem Aktuator bzw. Sensorelement, welches transversale und longitudinale Achsen aufweist.

Erfindungsgemäß wird an einer geeigneten Position einer Antriebs- oder Aktuatorwelle der zu betätigenden Komponente ein berührungsloser Drehmomentsensor angebracht, der auf dem Prinzip der Magnetostriktion beruht. Anstatt beispielsweise eine teure, schwere und wenig präzise mechanische Überlastkupplung ("Rutschkupplung") einzusetzen, wird erfindungsgemäß das anliegende Drehmoment im Antrieb magnetostriktiv und vollkommen berührungslos gemessen.

Magnetostriktive Drehmomentsensoren zeichnen sich durch konstruktive Einfachheit, hohe Robustheit, Berührungslosigkeit und hohe erzielbare Genauigkeit aus und erfüllt so die technischen Anforderungen des Flugzeugbaus besonders vorteilhaft. Eine vorhandene Welle der Antriebseinheit wird durch magnetische Codierung bereits zum Primärsensor, ohne dass es zusätzlichen Bauteilaufwands bedarf, wobei der Magnetfeldsensor die Sekundärkomponente darstellt. Hieraus folgt eine hohe Gewichts- und Kostenersparnis. Die erzielbare Genauigkeit einer Drehmomentbegrenzung ist weitaus besser als im Falle herkömmlicher, mechanischer Überlastsicherungen. Verglichen mit anderen Sensorprinzipien (z.B. Drehmoment- oder Kraftmessung mittels aufgebrachter Dehnungsmessstreifen, DMS) hat die magnetostriktive Sensorik den Vorteil höherer Robustheit insbesondere bei den starken Temperaturschwankungen, denen äußere Flugzeugkomponenten ausgesetzt sind.

Nach einer Weiterbildung der erfindungsgemäßen Vorrichtung kann weiterhin eine Auswerteelektronik zum Vergleichen eines Sensorsignals von dem Magnetfeldsensor mit einem vordefinierten Grenzwert oder zum Vergleichen eines aus dem Sensorsignal bestimmten Kraft- oder Drehmomentwerts mit einem vordefinierten Grenzwert und zum Reduzieren der Leistung einer Antriebseinheit der Welle bei Erreichen oder Überschreiten des Grenzwerts vorgesehen sein. Bei Erreichen oder Überschreiten des vordefinierten Grenzwertes können so Überlastsituationen zuverlässig vermieden werden.

Gemäß einer anderen Weiterbildung kann die Welle einen zweiten remanent in einer zweiten Umfangsrichtung magnetisierten Bereich aufweisen, wobei die zweite Umfangsrichtung gegenläufig zur ersten Umfangsrichtung ist, und die Vorrichtung kann wenigstens einen zweiten Magnetfeldsensor zum Erfassen einer unter Einwirkung von Kraft und/oder Drehmoment auf die Welle auftretenden Feldrichtungsänderung des zweiten magnetisierten Bereichs umfassen. Die gegenläufige Magnetisierung der zwei Bereiche hat den Vorteil, dass Differenzmessungen mit hoher Empfindlichkeit durchgeführt werden können.

Eine andere Weiterbildung besteht darin, dass ein weiterer erster und/oder zweiter Magnetfeldsensor vorgesehen sein kann. Auf diese Weise wird die Sensorik redundant ausgelegt, was die Funktionssicherheit erhöht.

Gemäß einer anderen Weiterbildung können der bzw. die ersten Magnetfeldsensoren berührungslos entlang einem ersten Außenumfang angeordnet sein und/oder der bzw. die zweiten Magnetfeldsensoren berührungslos entlang einem zweiten Außenumfang angeordnet sein. Im Falle einer Hohlwelle können die Magnetfeldsensoren berührungslos entlang einem ersten bzw. zweiten Innenumfang angeordnet sein. Die kann insbesondere für alle Magnetfeldsensoren gelten, es können aber auch beispielsweise die ersten Magnetfeldsensoren innen und die zweiten Magnetfeldsensoren außen angeordnet sein oder umgekehrt.

Gemäß einer anderen Weiterbildung kann die Auswerteelektronik zusammen mit dem bzw. den Magnetfeldsensoren eine Baugruppe bilden oder alternativ dazu kann die Auswerteelektronik entfernt von dem bzw. den Magnetfeldsensoren angeordnet sein.

Eine andere Weiterbildung besteht darin, dass die Welle aus einem magnetisierbaren Stahl, insbesondere mit einer Härte größer als 40HRC, gefertigt sein kann, vorzugsweise 1.2767, 1.4542, 300M, 1.4021, 16NCD13, 15-5PH oder wobei die Welle aus einem Werkstoff mit magnetisierbarer Beschichtung, insbesondere einer Beschichtung mit martensitischem Gefüge gefertigt sein kann.

Die erfindungsgemäße Vorrichtung zum Bestimmen einer mechanischen Kraft eines Aktuators auf eine bewegliche Flugzeugkomponente oder eine der Weiterbildungen sowie eine Antriebseinheit zum Antreiben der Welle können in einem Antriebssystem für Landeklappen und/oder Vorflügel eines Flugzeugs enthalten sein.

Das Antriebssystem kann dahingehend weitergebildet werden, dass die Welle mit einem Verteilergetriebe zum Verteilen einer Leistung der Antriebseinheit auf den linken und rechten Halbflügel verbunden sein kann und/oder dass die Welle mit einem Abzweiggetriebe zum Abzweigen einer Leistung der Antriebseinheit auf wenigstens einen Aktuator verbunden sein kann, wobei eine Drehbewegung der Welle in eine Linearbewegung des Aktuators umwandelt werden kann.

In dem Antriebssystem können eine oder mehrere weitere erfindungsgemäße Vorrichtungen zum Bestimmen einer mechanischen Kraft eines Aktuators auf eine bewegliche Flugzeugkomponente oder deren Weiterbildungen vorgesehen sein.

Das oben genannte Problem wird weiterhin gelöst durch ein Verfahren zum Bestimmen einer mechanischen Kraft an einem Aktuator für eine bewegliche Flugzeugkomponente gemäß Patentanspruch 13.

Die mechanische Kraft wird aus einem Drehmoment bestimmt, das an einer die Kraft übertragenden Welle anliegt, wobei das Drehmoment durch die magnetostriktive Sensorik gemessen wird.

### Kurzbeschreibung der Zeichnungen

- Figur 1: illustriert eine erste Ausführungsform der erfindungsgemäßen Vorrichtung.
- Figur 2: illustriert eine zweite Ausführungsform der erfindungsgemäßen Vorrichtung.
- Figur 3: illustriert ein erfindungsgemäßes Antriebssystem für Landeklappen und/oder Vorflügel eines Flugzeugs mit einer erfindungsgemäßen Vorrichtung.

### Beschreibung der Ausführungsformen

Erfindungsgemäß wird eine extrem leichte, robuste Vorrichtung bereitgestellt, die Überlastsituationen an Aktuatoren mechanisch betätigter Flugzeugkomponenten zuverlässig und robust verhindert, die die hohen Massen und Kosten herkömmlicher mechanischer Überlastkupplungen (torque limiter) vermeidet, die die Genauigkeit der Drehmomentbegrenzung herkömmlicher Überlastkupplungen verbessert, und die die Einschränkungen von Dehnungsmessstreifen-Sensorik (mangelhafte Stabilität insbesondere bei Extremtemperaturen; mangelhafte Dauerhaltbarkeit) vermeidet.

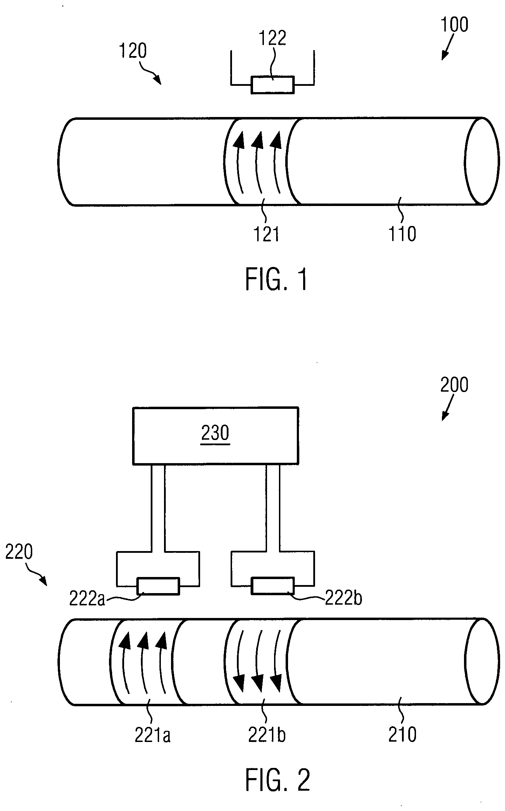

Figur 1 zeigt eine erste Ausführungsform der erfindungsgemäßen Vorrichtung 100, welche eine Welle 110 und einen magnetostriktiven Sensor 120 umfasst. Der magnetostriktive Sensor 120 besteht aus einem magnetisierten Bereich 121 der Welle 110 und aus einem Magnetfeldsensor 122. Der Magnetfeldsensor 122 detektiert die Magnetfeldstärke und/oder Veränderungen in der Magnetfeldstärke und/oder Änderungen der Magnetfeldrichtung.

Die Magnetisierung des Bereichs 121 der Welle erfolgt bevorzugt unter Verwendung des Verfahrens "pulse current modulated encoding" (PCME). Dabei wird die Welle einmalig mit Strompulsen kodiert. Dadurch wird ein in sich geschlossenes und dauerhaftes Magnetmuster in der Welle erzeugt, ohne die Welle in den mechanischen Eigenschaften zu ändern. Das bereits bestehende mechanisch beanspruchte Bauteil, in diesem Fall die Welle, ist selbst Teil des Sensors.

Die Messung mit dem magnetostriktiven Sensor beruht auf dem magnetostriktiven Effekt, der auftritt, wenn ein ferromagnetischer Kristall magnetisiert wird und dabei mit wachsender Feldstärke eine Formänderung des magnetisierten Kristalls erfolgt. Dies beruht darauf, dass sich in den sogenannten Weißschen Bezirken die Magnetisierungsrichtung dreht und deren Grenzen verschoben werden. Hierdurch erfolgt eine Formänderung des ferromagnetischen Körpers. Umgekehrt ergeben sich durch Anlegen mechanischer Kräfte Änderungen in der Magnetisierung, sodass eine in der Welle gespeicherte Magnetfeldstruktur sich bei Anlegen eines Drehmoments verändert, was für die Messung ausgenutzt wird.

Im PCME-Prozess wird eine hohe elektrische Leistung durch die Welle geleitet, wobei die Hauptarbeitsprozesse der PCME-Technologie nacheinander ablaufen. Im ersten Schritt des PCME-Prozesses werden magnetische Störfelder, die noch in der Welle vorhanden sein könnten, entfernt. Im zweiten Schritt werden die "in sich geschlossenen" Magnetfeldstrukturen an der vorgesehen Stelle eingeprägt. In dritten Schritt werden unerwünschte magnetische Nebenwirkungen entfernt, ohne dabei die erwünschte PCME-Magnetisierung zu verändern.

Im Unterschied zu anderen bekannten Verfahren zur Messung von Kräften bzw. Drehmomenten besitzt der PCME-Sensor eine Reihe von Vorteilen. Er ist in Lage, berührungslos Drehmomente zu messen, wobei dies über einen großen Betriebstemperaturbereich von -50° C bis über +250° C erfolgen kann. Der Sensor ist unempfindlich gegenüber Schmutz, Öl, Wasser sowie mechanische Stoßbelastungen und verfügt über eine sehr hohe Messgenauigkeit.

Der magnetostriktive Sensor besteht somit aus einem Primärsensor in einer Region der Welle, die magnetisch kodiert wird. Die Welle kann für den PCME Prozess aus ferromagnetischem Material bestehen, das eine gute Basis für einen PCME-Sensor darstellt. Der Primärsensor wandelt die anliegenden Kräfte in ein magnetisches Signal um, das auf der Oberfläche der Welle erfasst werden kann. Die Welle kann als Voll- oder Hohlwelle ausgeführt sein. Der Sekundärsensor ist eine Anordnung von einem oder mehreren Magnetfeldsensoren die unmittelbarer Nähe der magnetisch kodierten Region der Welle platziert werden. Da die Magnetfeldsensoren die Welle nicht berühren, kann die Welle frei rotieren. Der Sekundärsensor setzt Änderungen des magnetischen Feldes, welche durch Kräfte im Primärsensor verursacht werden, in elektrische Signale um. Eine Auswerteeinheit wird mit den Magnetfeldsensorspulen verbunden und dient der Weiterverarbeitung der Ausgangssignale von den Spulen.

Figur 2 zeigt eine zweite Ausführungsform 200 der erfindungsgemäßen Vorrichtung im Ausschnitt. In dieser Ausführungsform umfasst der Sensor 220 an der Welle 210 als Primärsensor zwei axial hintereinander liegende magnetisierte Bereiche 221a, 221b, die durch einen Begrenzungsbereich voneinander getrennt sind, und zwei Magnetfeldsensoren 222a und 222b. Weiterhin ist eine Auswerteeinrichtung 230 vorgesehen, welche die Signale von den Magnetfeldsensoren 222a, 222b auswertet, und feststellt, ob ein vorgegebener Grenzwert des an der Welle 210 anliegenden Drehmoments erreicht oder überschritten wird.

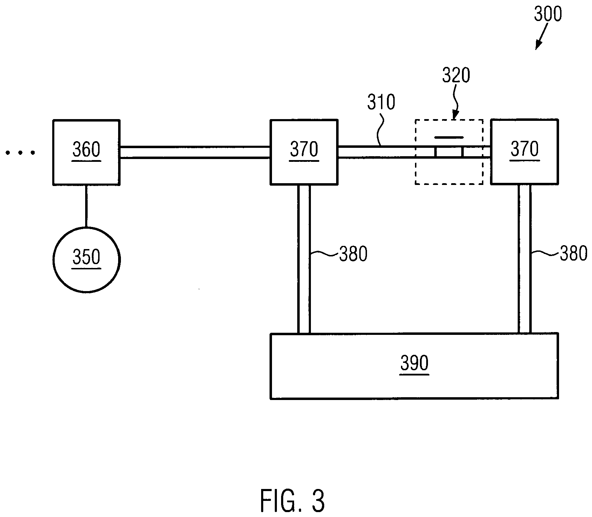

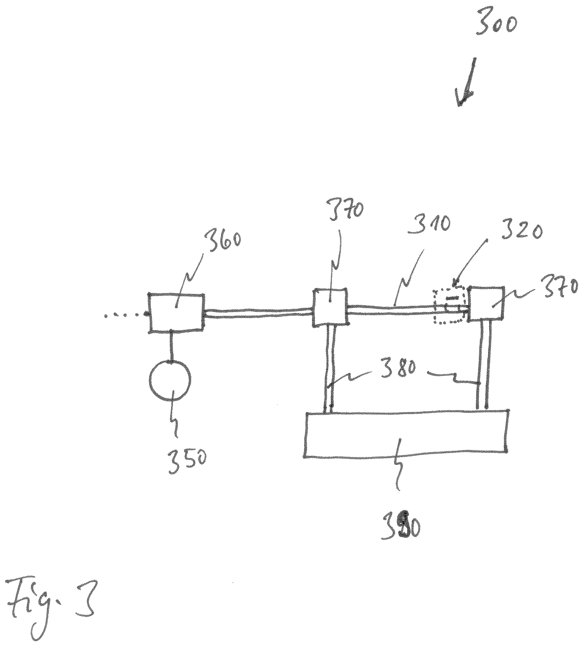

Figur 3 illustriert eine beispielhafte Ausführungsform eines erfindungsgemäßen Antriebssystems 300 für Landeklappen und/oder Vorflügel eines Flugzeugs mit einer erfindungsgemäßen Vorrichtung. Es umfasst eine Antriebseinheit 350, ein Verteilergetriebe 360, von dem aus die Leistung der Antriebseinheit 350 in den linken und rechten Halbflügel verzweigt wird (dargestellt ist nur der rechte Bereich). Weiterhin sind Abzweiggetriebe 370 vorgesehen, welche die Antriebsleistung weiter zu den Aktuatoren 380 führen, die wiederum eine Drehbewegung in eine translatorische Bewegung umwandeln und somit die Stellung der Landeklappe (oder des Vorflügels) 390 ändern.

Zusammenfassend: Erfindungsgemäß wird an einer geeigneten Position einer Antriebs- oder Aktuatorwelle der zu betätigenden Komponente ein berührungsloser Drehmomentsensor angebracht, der auf dem Prinzip der Magnetostriktion beruht. Erfindungsgemäß wird das anliegende Drehmoment im Antrieb magnetostriktiv und berührungslos gemessen. Bei Erreichen oder Überschreiten eines vordefinierten Grenzwertes wird die Leistung der Antriebseinheit reduziert, so dass Überlastsituationen zuverlässig vermieden werden können. Die Vorteile der Erfindung bestehen darin, dass magnetostriktive Drehmomentsensoren sich durch konstruktive Einfachheit, hohe Robustheit, Berührungslosigkeit und hohe erzielbare Genauigkeit auszeichnen und so die technischen Anforderungen des Flugzeugbaus besonders vorteilhaft erfüllen. Eine vorhandene Welle der Antriebseinheit wird durch magnetische Codierung bereits zum Primärsensor, ohne dass es zusätzlichen Bauteilaufwands bedarf. Hieraus folgt eine hohe Gewichts- und Kostenersparnis. Die erzielbare Genauigkeit der Drehmomentbegrenzung ist weitaus besser als im Falle herkömmlicher, mechanischer Überlastsicherungen. Verglichen mit anderen Sensorprinzipien (z.B. Drehmoment- oder Kraftmessung mittels aufgebrachter Dehnungsmessstreifen, DMS) hat magnetostriktive Sensorik die Vorteile höherer Robustheit insbesondere bei den starken Temperaturschwankungen, denen äußere Flugzeugkomponenten ausgesetzt sind.

## Patentansprüche

1. Antriebssystem (300) für eine bewegliche Flugzeugkomponente (390), umfassend eine Antriebseinheit (350) zum Antreiben einer Welle (110; 210; 310), ein Abzweiggetriebe (370), einen Aktuator (380) und eine Vorrichtung (100; 200) zum Bestimmen einer mechanischen Kraft des Aktuators (380) auf die bewegliche Flugzeugkomponente (390), wobei die Vorrichtung (100; 200) umfasst:
die Welle (110; 210; 310) zum Übertragen von Kraft auf den Aktuator (380), **dadurch gekennzeichnet, dass** die Welle einen ersten remanent in einer ersten Umfangsrichtung magnetisierten Bereich (121; 221a) aufweist; und
wenigstens einen ersten Magnetfeldsensor (122; 222a) zum Erfassen einer unter Einwirkung von Drehmoment auf die Welle auftretenden Feldrichtungsänderung des ersten magnetisierten Bereichs;
wobei die mechanische Kraft aus einem Drehmoment bestimmbar ist, das an der die Kraft übertragenden Welle (110; 210; 310) anliegt und das aus einem Sensorsignal von dem wenigstens einen ersten Magnetfeldsensor (122; 222a) bestimmt wird; und
wobei die Welle (110; 210; 310) mit dem Abzweiggetriebe (370) zum Abzweigen einer Leistung der Antriebseinheit (350) auf den Aktuator (380) verbunden ist, wobei der Aktuator (380) eine Drehbewegung der Welle (110; 210; 310) in eine Linearbewegung der beweglichen Flugzeugkomponente (390) umwandelt.

2. Antriebssystem nach Anspruch 1, weiterhin umfassend:
eine Auswerteelektronik (230) zum Vergleichen eines Sensorsignals von dem Magnetfeldsensor mit einem vordefinierten Grenzwert oder zum Vergleichen eines aus dem Sensorsignal bestimmten Kraft- oder Drehmomentwerts mit einem vordefinierten Grenzwert und zum Reduzieren der Leistung einer Antriebseinheit der Welle bei Erreichen oder Überschreiten des Grenzwerts.

3. Antriebssystem nach Anspruch 1 oder 2, wobei die Welle einen zweiten remanent in einer zweiten Umfangsrichtung magnetisierten Bereich (221b) aufweist und die zweite Umfangsrichtung gegenläufig zur ersten Umfangsrichtung ist, und
wobei die Vorrichtung wenigstens einen zweiten Magnetfeldsensor (222b) zum Erfassen einer unter Einwirkung von Kraft und/oder Drehmoment auf die Welle auftretenden Feldrichtungsänderung des zweiten magnetisierten Bereichs umfasst.

4. Antriebssystem nach einem der Ansprüche 1 bis 3, wobei ein weiterer erster und/oder zweiter Magnetfeldsensor vorgesehen ist.

5. Antriebssystem nach einem der Ansprüche 1 bis 4, wobei der bzw. die ersten Magnetfeldsensoren berührungslos entlang einem ersten Außenumfang angeordnet sind und/oder der bzw. die zweiten Magnetfeldsensoren berührungslos entlang einem zweiten Außenumfang angeordnet oder wobei im Falle einer Hohlwelle die Magnetfeldsensoren berührungslos entlang einem ersten bzw. zweiten Innenumfang angeordnet sind.

6. Antriebssystem nach Anspruch 2 oder einem der Ansprüche 3 bis 5 in Kombination mit Anspruch 2, wobei die Auswerteelektronik zusammen mit dem bzw. den Magnetfeldsensoren eine Baugruppe bildet oder wobei die Auswerteelektronik entfernt von dem bzw. den Magnetfelddetektoren angeordnet ist.

7. Antriebssystem nach einem der Ansprüche 1 bis 6, wobei die Welle aus einem magnetisierbaren Stahl gefertigt ist, vorzugsweise 1.2767, 1.4542, 300M, 1.4021, 16NCD13, 15-5PH oder wobei die Welle aus einem Werkstoff mit magnetisierbarer Beschichtung gefertigt ist.

8. Antriebssystem nach Anspruch 7, wobei der magnetisierbare Stahl eine Härte von 40HRC oder die magnetisierbarere Beschichtung ein martensitisches Gefüge aufweist.

9. Antriebssystem nach einem der Ansprüche 1 bis 8, wobei die Welle eine Voll- oder Hohlwelle ist.

10. Antriebssystem nach einem der Ansprüche 1 bis 9, wobei die Welle mit einem Verteilergetriebe (360) zum Verteilen einer Leistung der Antriebseinheit (350) auf einen linken und rechten Halbflügel verbunden ist.

11. Verfahren zum Bestimmen einer mechanischen Kraft an einem Aktuator (380) in einem Antriebssystem (300) für eine bewegliche Flugzeugkomponente (390) nach einem der Ansprüche 1 bis 10, wobei die mechanische Kraft aus dem Drehmoment bestimmt wird, das an der die Kraft übertragenden Welle anliegt und das aus dem Sensorsignal von dem wenigstens einen ersten Magnetfeldsensor bestimmt wird.

## Claims

1. Drive system (300) for a movable aircraft component (390), comprising a drive unit (350) for driving a shaft (110; 210; 310), a branching transmission (370), an actuator (380) and a device (100; 200) for determining a mechanical force of the actuator (380) on the movable aircraft component (390), the device (100; 200) comprising:
the shaft (110; 210; 310) for transmitting force to the actuator (380), **characterised in that** the shaft comprises a first region (121; 221a) that is remanently magnetised in a first circumferential direction; and
at least one first magnetic field sensor (122; 222a) for detecting a change in field direction of the first magnetised region, which change occurs under the action of torque on the shaft;
it being possible to determine the mechanical force from a torque that is applied to the shaft (110; 210; 310) transmitting the force and that is determined from a sensor signal from the at least one first magnetic field sensor (122; 222a); and
the shaft (110; 210; 310) being connected to the branching transmission (370) for branching power of the drive unit (350) to the actuator (380),
the actuator (380) converting a rotary movement of the shaft (110; 210; 310) into a linear movement of the movable aircraft component (390).

2. Drive system according to claim 1, further comprising:
an evaluation electronic system (230) for comparing a sensor signal from the magnetic field sensor with a predefined limit value or for comparing a force or torque value determined from the sensor signal with a predefined limit value and for reducing the power of a drive unit of the shaft when the limit value is reached or exceeded.

3. Drive system according to either claim 1 or claim 2, wherein the shaft comprises a second region (221b) that is remanently magnetised in a second circumferential direction and the second circumferential direction is opposite the first circumferential direction, and
wherein the device comprises at least one second magnetic field sensor (222b) for detecting a change in field direction of the second magnetised region, which change occurs under the action of force and/or torque on the shaft.

4. Drive system according to any of claims 1 to 3, wherein another first and/or second magnetic field sensor is provided.

5. Drive system according to any of claims 1 to 4, wherein the first magnetic field sensor(s) are arranged along a first outer circumference in a contactless manner and/or the second magnetic field sensor(s) are arranged along a second outer circumference in a contactless manner or wherein, in the case of a hollow shaft, the magnetic field sensors are arranged along a first or second inner circumference in a contactless manner.

6. Drive system according to claim 2 or drive system according to any of claims 3 to 5 in combination with claim 2, wherein the evaluation electronic system forms an assembly together with the magnetic field sensor(s) or wherein the evaluation electronic system is remote from the magnetic field detector(s).

7. Drive system according to any of claims 1 to 6, wherein the shaft is made of a magnetisable steel, preferably 1.2767, 1.4542, 300M, 1.4021, 16NCD13, 15-5PH or wherein the shaft is made of a material having a magnetisable coating.

8. Drive system according to claim 7, wherein the magnetisable steel has a hardness of 40HRC or the magnetisable coating has a martensitic structure.

9. Drive system according to any of claims 1 to 8, wherein the shaft is a solid shaft or a hollow shaft.

10. Drive system according to any of claims 1 to 9, wherein the shaft is connected to a distributor gear (360) for distributing power of the drive unit (350) to a left and right wing half.

11. Method for determining a mechanical force on an actuator (380) in a drive system (300) for a movable aircraft component (390) according to any of claims 1 to 10, wherein the mechanical force is determined from the torque that is applied to the shaft transmitting the force and that is determined from the sensor signal from the at least one first magnetic field sensor.

## Revendications

1. Système d'entraînement (300) pour des composants d'avion mobiles (390), comprenant une unité d'entraînement (350) pour entraîner un arbre (110; 210; 310), une transmission de dérivation (370), un actionneur (380) et un dispositif (100; 200) pour déterminer une force mécanique de l'actionneur (380) sur le composant d'avion mobile (390), le dispositif (100; 200) comprenant :
l'arbre (110; 210; 310) pour la transmission de force à l'actionneur (380),
**caractérisé en ce que**
l'arbre présente une première zone (121; 221a) magnétisée de manière rémanente dans une première direction périphérique ; et
le dispositif présente au moins un premier capteur de champ magnétique (122; 222a) destiné à relever une variation de direction de champ de la première zone magnétisée, apparaissant sous l'effet d'un couple sur l'arbre;
la force mécanique pouvant être déterminée à partir d'un couple qui est appliqué à l'arbre (110; 210; 310) transmettant la force et qui est déterminé à partir d'un signal de capteur dudit au moins un premier capteur de champ magnétique (122; 222a) ; et
l'arbre (110; 210; 310) étant relié à la transmission de dérivation (370) pour dériver une puissance de l'unité d'entraînement (350) vers l'actionneur (380), et l'actionneur (380) convertissant un mouvement de rotation de l'arbre (110; 210; 310) en un mouvement linéaire du composant d'avion mobile (390).

2. Système d'entraînement selon la revendication 1, comprenant en outre :
une électronique de traitement de données (230) pour comparer un signal de capteur du capteur de champ magnétique à une valeur limite prédéfinie, ou bien pour comparer une valeur de force ou de couple déterminée à partir du signal de capteur, à une valeur prédéfinie, et pour réduire la puissance d'une unité d'entraînement de l'arbre lorsque la valeur limite est atteinte ou dépassée.

3. Système d'entraînement selon la revendication 1 ou la revendication 2, dans lequel l'arbre présente une deuxième zone (221b) magnétisée de manière rémanente dans une deuxième direction périphérique, et la deuxième direction périphérique est de sens opposé à la première direction périphérique, et
dans lequel le dispositif comprend au moins un deuxième capteur de champ magnétique (222b) destiné à relever une variation de direction de champ de la deuxième zone magnétisée, apparaissant sous l'effet d'une force et/ou d'un couple sur l'arbre.

4. Système d'entraînement selon l'une des revendications 1 à 3, dans lequel il est prévu un autre premier et/ou deuxième capteur de champ magnétique.

5. Système d'entraînement selon l'une des revendications 1 à 4, dans lequel le ou les premiers capteurs de champ magnétique sont agencés sans contact, le long d'une première périphérie extérieure, et/ou le ou les deuxièmes capteurs de champ magnétique sont agencés sans contact le long d'une deuxième périphérie extérieure, ou bien dans lequel, dans le cas d'un arbre creux, les capteurs de champ magnétique sont agencés sans contact le long d'une première ou bien respectivement d'une deuxième périphérie intérieure.

6. Système d'entraînement selon la revendication 2, ou bien l'une des revendications 3 à 5 en combinaison avec la revendication 2, dans lequel l'électronique de traitement de données forme un module, en commun avec le ou les capteurs de champ magnétique, ou bien dans lequel l'électronique de traitement de données est agencée à distance du ou des capteurs de champ magnétique.

7. Système d'entraînement selon l'une des revendications 1 à 6, dans lequel l'arbre est fabriqué en un acier pouvant être magnétisé, de préférence 1.2767, 1.4542, 300M, 1.4021, 16NCD13, 15-5PH, ou bien dans lequel l'arbre est fabriqué en un matériau avec un revêtement pouvant être magnétisé.

8. Système d'entraînement selon la revendication 7, dans lequel l'acier pouvant être magnétisé présente une dureté de 40HRC, ou bien le revêtement pouvant être magnétisé présente une structure martensitique.

9. Système d'entraînement selon l'une des revendications 1 à 8, dans lequel l'arbre est un arbre plein ou un arbre creux.

10. Système d'entraînement selon l'une des revendications 1 à 9, dans lequel l'arbre est relié à une transmission de répartition (360) pour répartir une puissance de l'unité d'entraînement (350) sur une demi-aile gauche et droite.

11. Procédé pour déterminer une force mécanique au niveau d'un actionneur (380) dans un système d'entraînement (300) pour un composant d'avion mobile (390) selon l'une des revendications 1 à 10, d'après lequel la force mécanique est déterminée à partir d'un couple, qui est appliqué à l'arbre transmettant la force et qui est déterminé à partir du signal de capteur dudit au moins un premier capteur de champ magnétique.
